# EUROPEAN PATENT APPLICATION

(11) **EP 1 643 472 A1**
(43) Date of publication of application: **05.04.2006**
(21) Application number: 04077691.6
(22) Date of filing: 29.09.2004
(51) Int. Cl.: G09B 5/02, G09B 17/00

(54) **Method for improving the readability of displayed texts and devices in which the method is implemented**

(71) Applicant: Pennings, Jeroen Jacobus, 2593 ZE Den Haag (NL)
(72) Inventor: Pennings, Jeroen Jacobus, 2593 ZE Den Haag (NL)

(57) **Abstract**

The invention relates to a new method for improving the readability of displayed texts, in particular for people with poor reading skills and/or dyslexia, as well as devices in which this method is implemented. The invention is based on the discovery that within the above section of people, a large number can read a text very fluently indeed when this text is displayed in such a way that it can be read in the opposite direction. If texts are composed of letters of the alphabet then this group has difficulty in reading from left to right. However, they can read the text (2") more easily when it is displayed in such a way that it can be read from right to left It is preferable that any information present (3) that does not contain any text, e.g. photographs, drawings and/or diagrams, retains its original orientation, as it is usually less recognizable if its orientation has changed.

The invention provides for devices which have a screen or display on which text can be shown in which the method has been implemented according to the invention e.g. a television set, a computer, a portable computer also called laptop, a mobile phone, a personal digital assistant (PDA) or a combination of these devices.

Furthermore, the invention provides for a so-called DVD and/or DVD player in which the method is implemented so that in particular subtitling can be displayed according to the method as per the invention. The invention also provides for printed publications such as books, magazines and/or newspapers in electronic form in which the text is displayed according to the method described above. Finally the invention provides for data carriers for software applications with which the method described above can be implemented in programmable electronic devices equipped with a screen, in particular a computer, laptop, PDA and/or mobile phone.

## Description

The present invention relates to a new method for improving the readability of displayed texts, in particular for people with poor reading skills and/or dyslexia, as well as devices in which this method is implemented. This group of people lacks the ability to read fluently, despite normal intelligence and adequate schooling. Estimates on the number of people with dyslexia vary from four to ten per cent of the population. For people who have this handicap the problems have a greater impact than not being able to read and write properly. They often struggle with low self-esteem and it can influence their professional and social development.

There is a lot of uncertainty about the causes of dyslexia. The present theories about the origin of this handicap are based on the assumption that the coordination of the eye movements of these individuals does not function properly. In patent specification US-A-6398730 poorly functioning brain tissue is said to be the cause of these impaired eye movements, also called cerebral vestibular dysfunction. In this patent specification a training program is suggested for reducing the symptoms of this handicap.
In US-A-6382791 it is stated that dyslexic people have difficulty recognizing letters and words quickly. A test program is suggested for detecting dyslexia and a program is described for improving the recognition of letters and words and thus reducing the symptoms of dyslexia. As far as known these training programs, whether aided by the use of a personal computer or not, do not yield the expected results.

The invention is based on the discovery that within the group of people with poor reading skills and/or dyslexia, a large part can read a text better when it is displayed in such a way that it can be read in the opposite direction. When a text is composed of letters of the alphabet this group finds it difficult to read from left to right but they can read the text more easily when it is displayed in such a way that it can be read from right to left.
This is based on the following principle. The right eye is dominant in most individuals. However, people with poor reading skills and/or dyslexia usually have a dominant left eye. When these people read a text from left to right it usually results in impaired eye-movement coordination. The non-dominant right eye has to direct the eye movements, or the dominant left eye has to do so from an unfavourable position. Besides this, the connection with the parts of the brain which have to process the information of the eyes is not optimal. When these people read from right to left the eye movements become well coordinated after a short training period. When reading from right to left the dominant left eye can direct the eye movements and the non-dominant right eye follows. The letters are read quickly one after another and it is much simpler to keep following the line. The information is processed faster in the brain. When people with a dominant right eye read from left to right the eye movements are also well coordinated.

The principle of the invention is the method described below for improving the readability of displayed texts, in particular for people with poor reading skills and/or dyslexia. According to this method, the text is displayed in such a way that it can be read in a direction that is different to the normal direction. A western text consists of a chain of words in which the words are built up by a chain of letters. Such a text, which is composed of letters from the alphabet, is normally read from left to right. According to the invention, texts that are composed of letters of the alphabet should preferably be displayed in such a way that they can be read from right to left.
It is preferable that information present which does not contain any text, for instance photographs, drawings and diagrams, retains its original orientation, as it is usually less recognizable if its orientation has changed. The top of, for instance a drawing is still at the top after the text is displayed in a different way. The same goes for the right, left and bottom of the drawing. However, it is possible that these elements will be placed in a different position with respect to the text.
Displaying existing texts in such a way that they can be read in a different direction can be done preferably by rotating the text 180 degrees in the display area or by displaying the text as a mirror image. These adaptations can be carried out by page as well as by line.

In certain cases texts are sometimes displayed rotated 90 degrees in the area of display. In these cases this is done for design reasons and is not aimed at influencing readability, in particular for people with poor reading skills and/or dyslexia. Sometimes a word is displayed as a mirror image, for instance on a police car. This adjustment is made in order to improve readability for drivers who can read this word normally using their rear view mirror. In this case however it is not a matter of improving the readability of texts for the benefit of people with poor reading skills and/or dyslexia.

Further, the invention provides for devices equipped with a screen and/or display on which text can be displayed, in which the method according to the invention is implemented, in particular a television set, a computer, a portable computer also called laptop, a mobile phone, a personal digital assistant (PDA) or a combination of the aforementioned devices.
Further, the invention comprises a so-called DVD and/or DVD player in which the method is implemented so in particular the subtitling can be displayed according to the method as per the invention.
The invention also provides for printed publications such as books, magazines and/or newspapers or publications in an electronic form, in which the text is displayed according to the method described above.
Finally, the invention provides for data carriers for software applications implementing the method described above in electronic devices equipped with a screen and/or display, in particular, in a computer, a laptop, a PDA and/or mobile phone.

The invention is further described using the drawings as listed below:
- Figure 1:: a text and an illustration displayed in the usual way;
- Figure 2:: the text and illustration as in figure 1, in which the text is displayed reflected in a point;
- Figure 3:: the text and illustration as in figure 1, in which the text is displayed line by line reflected in a point;
- Figure 4:: the text and illustration as in figure 1, in which the text is displayed as a mirror image;
- Figure 5:: the text and illustration as in figure 1, in which the text is displayed line by line as a mirror image;
- Figure 6:: the screen of a television set with subtitling displayed in the usual way;
- Figure 7:: the television screen as in figure 6 displaying the subtitling reflected in a point:
- Figure 8:: the screen of a television set displaying a Ceefax page;
- Figure 9:: the screen as in figure 8 displaying the text reflected in a point;
- Figure 10:: a PDA displaying a page from the diary;
- Figure 11:: the PDA as in figure 10 displaying text from the diary reflected in a point line by line;

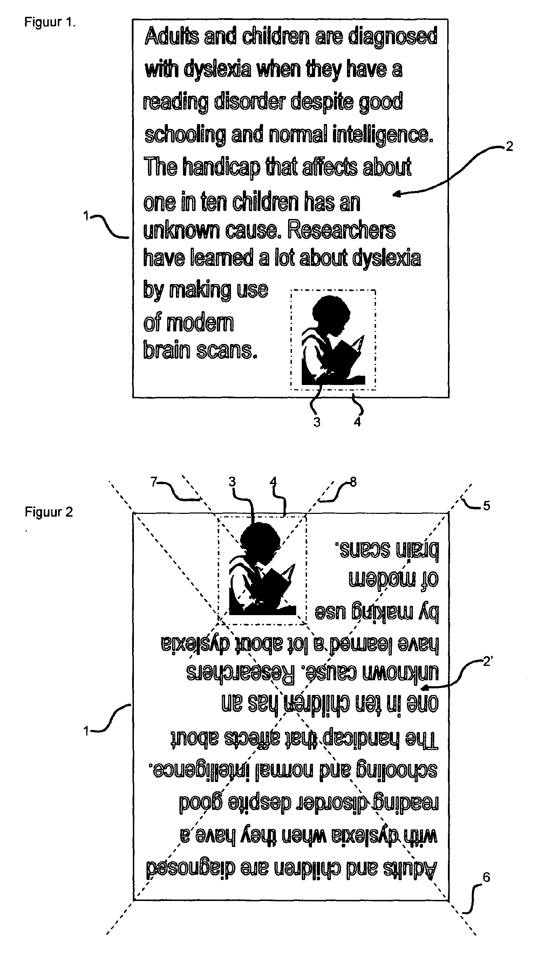

Figure 1 shows a text (2) and an illustration (3) displayed in the usual way. This text, composed of letters of the alphabet, is usually read from left to right. Text (2) and illustration (3) are shown in the display area (1), for instance a page or a screen.

Figure 2 shows the text (2) as in figure 1 displaying the text (2') reflected in a point. The point in which was reflected is the point situated at the centre of the display area (1) in which the text and illustration are displayed. In figure 2 this point is situated at the intersection of lines (5) and (6). As a result of this the text is turned upside down in its entirety. By reflecting the entire display area (1) in a point, the illustration (3) ends up at a different position in the display area (1). If so required for the purpose of recognition, this illustration (3) can, in order for it to retain its original orientation, be reflected once more in a point at the centre of its display area (4). In figure 2 this point coincides with the intersection of lines (7) and (8). The text (2) of figure 1 is now displayed in such a way (2') that it can be read from right to left. The illustration (3) retains its original orientation and is therefore still recognizable. However, the illustration (3) is displayed in figure 2 at another position in the display area (1). Reflection in a point, as described above, actually comes down to a rotation of 180 degrees of the text around the intersection of lines (5) and (6). It goes without saying that the invention also includes a rotation at angles deviating from 180 degrees, just as long as the result of this rotation is that the text can be read in a different direction to normal. The rotation could then be varied between 135 and 225 degrees. It is also conceivable that text is not rotated around the intersection of lines (5) and (6) but around another point, although in that case the position of the text on the display area will change.

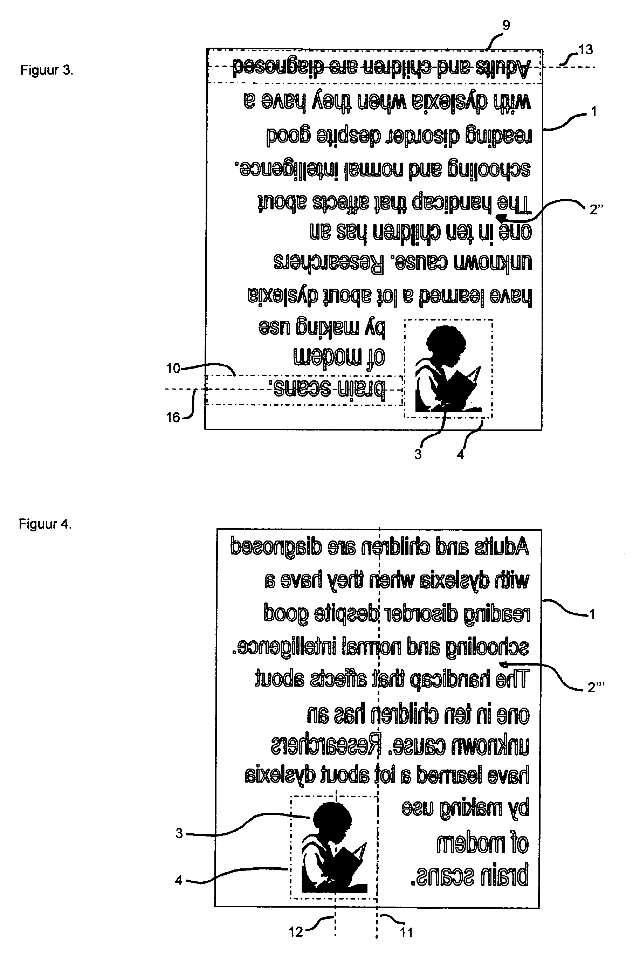

Instead of reflecting the entire text in a point, the text can also be displayed reflected in a point line by line, as is shown in figure 3. Each separate line of text is then reflected in a point situated at the centre of the display area of each line, so that the text is turned upside down line by line. Each line in the text (2") is reflected in the point situated at the intersection of the diagonals of the imaginary frame (9), (10) around the text line. The illustration (3) is not reflected and therefore retains its original orientation and its original position in the display area (1). The advantage of this way of performing the method is that the original text lay-out is retained to a large extent.

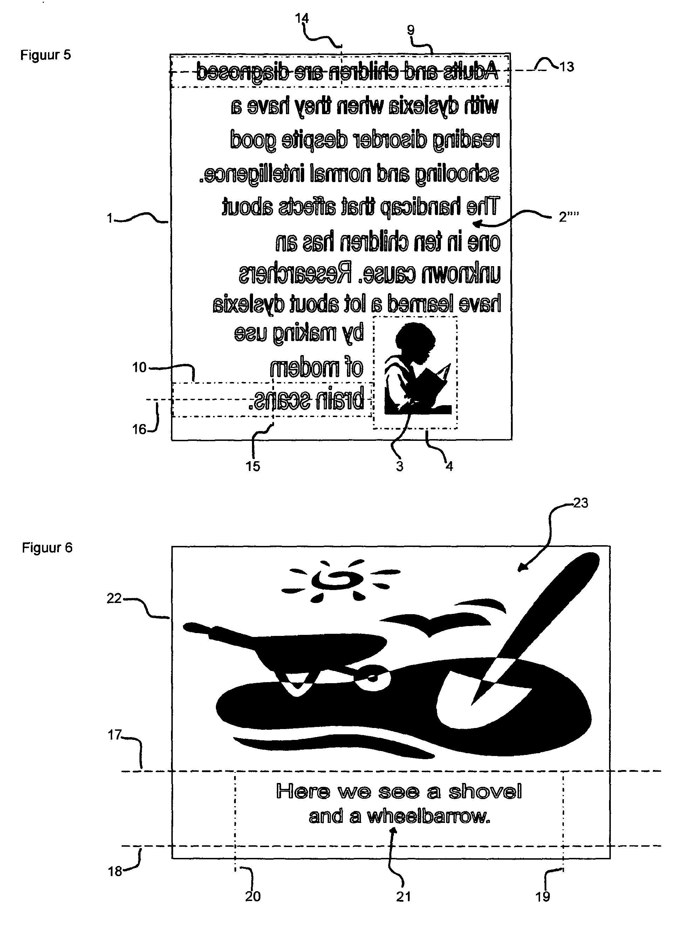

Another way to carry out the method according to the invention is shown in figure 4 and 5 in which the text is displayed as a mirror image. A reflection in a line can be performed reflecting the entire display area (1), as shown in figure 4. In this figure a reflection is performed in a straight line (11) in the display area (1) perpendicular to the direction of the text. Any information present that does not contain text, in particular illustrations, photographs and/or diagrams, is then also shown as a mirror image. To aid recognition, these elements can be displayed following a second reflection in a line in order to retain their original orientation. This involves a second reflection being carried out in a straight line running in the display area (4) in which this element is located and running parallel to line (11) in which the entire display area has been reflected. In figure 4 the illustration (3) in the display area (4) is reflected in line (12). After this second reflection the illustration (3) retains its original orientation but is located at a different position in the display area (1).
If the text is not situated at right angles to the linear direction of the display area, but diagonally or rotated, it can be advantageous not to reflect the text in a line at right angles to the text line but in a line running parallel to the longitudinal direction of the display area.

Furthermore, it is possible to display the text reflected in a line, line by line, as shown in figure 5. Each line is reflected in a straight line running through the centre of the frame around the text line (9), (10) and at right angles to the direction of the text. The first line of the text (2"") is reflected in line (14). This line runs in frame (9) in which the first line of the text (2"") is situated and runs parallel to the sides of the frame (9). The last line of the text is reflected in line (15) and is situated in the imaginary frame (10) around the last line of the text. This way of displaying the text can actually also be obtained by reflecting the text (2") in a line, line by line as shown in figure 3. When the text (2") in figure 3 is reflected a second time in a straight line (13) and (16) running in the imaginary frame (9) and (10) around the text line, parallel to the text direction, it will result in the same way of displaying text as in figure 5.
When this method is used, only the text will be displayed as a mirror image. The illustration (3) will not be reflected and therefore retains its natural orientation and its original position in the display area (1).

After some practise it will become clear to someone who has poor reading skills and/or dyslexia, which specific method of display according to the invention will yield the best results and improve reading skills the most.

The method described above for displaying text in order to improve the readability in particular of people with poor reading skills and/or dyslexia can particularly be applied in devices equipped with a screen and/or display.

Figure 6 shows a television screen (22), represented as a diagram showing text, e.g. subtitling (21), as well as the normal picture (23).

Text can be displayed in a number of different ways on the screen of a television set. In the first place, there is text on television which can be read like Ceefax (24). In this case the entire screen is filled with text. It is also possible to show sections of Ceefax (24) at the same time as normal television pictures (23), displayed on the screen as subtitling (21).

Furthermore, a translation of the spoken text is usually placed at the bottom of the screen as subtitling (21).
Information displayed as a 'ticker-tape' running line of text is also usually displayed at the bottom or at the top of the screen. In this way text messages are projected on the screen and move depending on the reading direction. For example, results of sport matches, stock exchange rates or other information which appears on the screen as text.

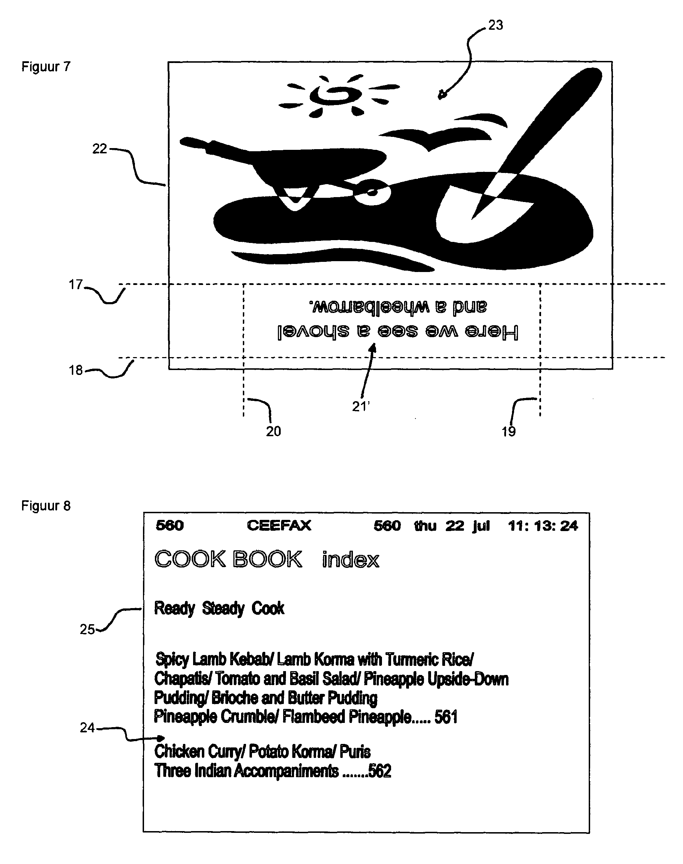

Television pictures can be displayed entirely or partially on the screen as a reflection; in this case a reflection in a point or in a line. A partial reflection, as shown in figure 7, is desirable when only part of the screen contains text, for instance with subtitling or a 'ticker-tape' running line of text. The area to be adapted is primarily defined by lines (17) and (18). The bottom part of the screen to be adapted can coincide with the bottom of the screen, so that the part of the screen to be adapted is set by line (17) only. If necessary the area can be further restricted sideways by lines (19) and (20), resulting in a larger part being displayed that remains unchanged. Preferably, these boundaries are selected and adjusted in the usual way using a menu option on the television set accessible by means of the remote control.
Figure 7 shows the result of a reflection in a point in the section of the screen that is defined by lines (17), (18), (19) and (20). Obviously , the selected area can also be displayed reflected in a line.
When a `ticker-tape' running line of text is shown on the television set moving from right to left (the normal direction when reading from left to right), the text will move from left to right when being displayed as a reflection.

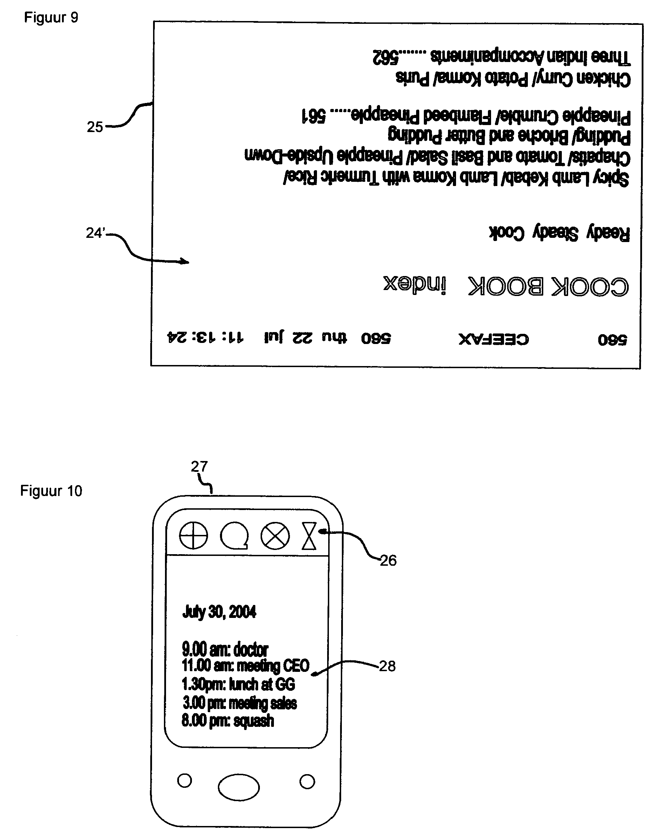

If the entire screen consists of text, for example a whole Ceefax page, then the entire screen can also be adapted according to the invention. Lines (17), (18), (19) and (20) then coincides with the sides of the screen. Figure 8 shows the screen of a television set (25) with a Ceefax message displayed on it (24). After reflecting the text (24') in a central point on the screen, the entire picture is then displayed rotated on the screen, as shown in figure 9.

Preferably, the picture adaptation for a Ceefax page functions independently from the adaptation of the normal television picture. When for instance subtitling by means of a Ceefax page is projected on to the normal picture, only this Ceefax text will be displayed according to the invention. The normal television picture keeps its original orientation completely.

It is also possible to divide the screen into several sections and to reflect in a point in each section. By doing so it becomes possible to reflect each line of the text from a point. In this way the text is displayed rotated, the first line of the text remaining at the top of the screen. One can read from top right to bottom left. When all information displayed on the screen is shown reflected in a point, the result will be that the text is displayed rotated and can be read from bottom right to top left.
Another possibility is to reflect the text in a straight, vertical line in the area of the screen. In this way the text will be displayed as a mirror image. It is also possible to reflect in this way all information on the screen or only a part of it.

In particular a digital television can easily be provided with the functionality described above. In the case of an analogue television, an adaptation to the entire picture can also be achieved easily.

Another possibility to display text on the screen of a television set according to the method described above is to equip the television set with devices that can analyze the information presented. The parts of the pictures containing text are displayed on the screen as a reflection according to the invention (either reflected in a point or reflected in a line) together with pictures not containing any text that are shown in the original way.

Yet another possibility to equip the television set with this new functionality is to add extra information to the television signal which makes it possible to select from various options regarding text display. In this case the television set should have technical facilities which make it possible to make a selection from the information offered and to subsequently display this on the screen. In this way several options for text display can be selected whereas the normal television pictures retain their original orientation.

The method according to the invention is furthermore well suited for application in a computer, where texts are frequently displayed on screen. The display of text on the screen is adjusted but information that does not contain any text, e.g. photographs, illustrations and/or diagrams, will retain their original orientation. This functionality can be built into the so-called operating system of the computer, or can be directly implemented in specific software applications, such as internet browsers, word processors, spreadsheets, data base programs, reader programs for electronic publications and/or email-clients. It is possible that the functionality is installed in existing software by way of a module or so-called plug-in.
It is preferable that the functionality is activated and configured by means of a menu.

A computer is frequently used to compose texts. A computer in which the above mentioned method is implemented improves the readability of text, in particular for people with poor reading skills and/or dyslexia. If, when composing a text document, the text can appear straight away on the screen in a way in which it can be read in the opposite direction, it is obviously an improvement for the aforementioned group of people. Possible adjustments to the screen lay-out, for instance in which the menus for the various parts of the program are not displayed on the top left but on the top right, can improve the use for the above group of people even more.

When the computer displays text on the screen in such a way that all information is displayed reflected in a point on the screen, the first letter of the new document will appear at the bottom right corner of the screen. This letter will therefore be seen on the screen reflected in a point, in other words: the letter is displayed rotated 180 degrees in the display area. The second letter of this line is also displayed reflected in a point to the left of the first letter. If the screen is entirely filled with text it is possible to read from bottom right to top left.
When the computer displays text on the screen in such a way that the text is reflected in a point line by line, the first letter of the new document will be located at the top right hand side of the screen. The second letter of this line will be located to the left of the first letter. When the screen is entirely filled with text it is possible to read from top right to bottom left.
When the computer displays text on the screen as a reflection in a line, the first letter of the document will appear on the screen as a mirror image at the top right. The second letter of the first line will be to the left of the first letter, also as a mirror image. The text will therefore read from top right to bottom left.
Whichever method is used to display text on the screen according to the invention, the digitals and punctuation marks, e.g. dot, comma, colon, semi colon, will be displayed in the same way as the letters of the text.
In order to underline parts of the text, some adjustments will also be necessary. When the computer displays text on the screen as a reflection in a point, the part of the text that must be underlined will have a horizontal, straight line above the text and not below. With regard to the functionality when displaying text as a reflection in a line, nothing will change when the text is underlined.
Another possibility is to equip the word processor with a window in which text can be displayed. This window can, for example, contain a horizontal line. Above and below the line the same text is displayed on the screen in a different way. To one side of the line the text can be displayed, for example, in such a way that it can be read from left to right and to the other side of the line the text can be displayed in such a way that it can be read from right to left. On one of the two sides of the window there is a section in which other parts of the text can be placed in the window; so that it is possible to browse through the text. The letter size can also be adjusted in order to increase the readability. This application could be very suitable for various learning purposes.
A number of options are available when printing text documents, whether obtained in the manner described above or not. The print menu can include an option for selecting how the text is to be printed. The text can, for instance, be printed in the same way as it is shown on the screen. But it is also possible to opt for printing the text on paper in a different way.
The use of marks that mark a paragraph or section must also be adjusted to this new page lay-out. It goes without saying that these marks should be at the right side in the document and not at the left. When the beginning of the text, or a new part of it, is marked by starting it at a different position (by indenting the text) then this should not be done at the left side but at the right side of the document.

When using an internet browser for downloading text from a network the readability of such texts shall improve, in particular for people who have poor reading skills and/or dyslexia, when the method defined in the invention is applied. In particular HTML pages can easily be displayed according to the invention, because lay-out, text and picture elements in these pages are explicitly indicated.
Possible adjustments to the screen lay-out, for instance displaying the various option menus not at the top left but at the top right of the screen, can make it easier to use for the aforementioned group of people.
When all information to be seen on the screen is displayed as a reflection (reflected in a point or in line), the lay-out of the page will change as well. In order that elements that do not contain any text such as drawings, photographs, diagrams and/or illustrations retain their original orientation, the same reflection will have to be applied a second time. As described above, the line or the point in which the reflection takes place will change for this second reflection. If the information on the screen contains many elements which do not contain any text, a reflection that only reflects the parts of the text line by line (reflection in a point or in a line) is easier. When using an internet browser, a window containing text that is displayed as a reflection according to the above-mentioned method, is also a very workable alternative. This window can be set at the required size and moved to the required position. Other parts of the screen retain their original form.
Via a network texts can be downloaded but it is also possible to upload and/or send information, in particular text. Text documents that are made with the aid of a computer equipped with the above-mentioned functionality for displaying text on the screen can be sent via internet. The recipient computer will display the text in the original way. A text first displayed on the screen as a mirror image, is displayed on the screen of the recipient in the normal way. Furthermore when the above-mentioned computer is used for other internet applications, such as chatting or the buying of products and/or services, the principle described above can again be applied.

When using a spreadsheet the readability can be improved, in particular for people with poor reading skills and/or dyslexia when a computer is used in which the above-mentioned method is implemented. Possible adjustments to the menu lay-out on the screen can make it easier to use for these groups. When a table is displayed on the screen, in its entirety, reflected in a point according to the above-mentioned method, the top of the table will be displayed at the bottom of the screen. The bottom of the table will be displayed at the top of the screen. In all modes for displaying text as described above, the first column of the table will be displayed on the right. All information in the table will remain in the frame intended for it. However, the text will be displayed as a reflection in a point or in a line according to the invention, depending on the text display mode chosen.

Furthermore the invention can be implemented in a reader program for electronic publications and/or electronic mail. The possibilities for this are on the whole similar to the possibilities discussed above.

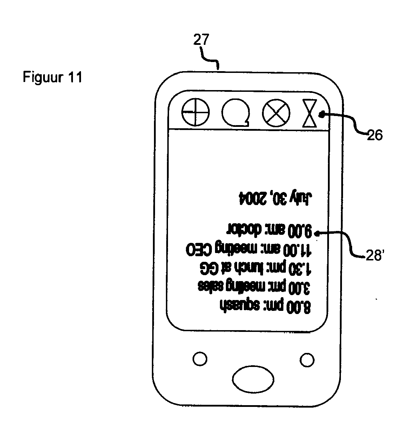

Furthermore the invention can be applied in a 'personal digital assistant' (PDA), a mobile phone and/or a combination of the two devices. Text can be displayed on the screen according to the method described above. With regard to these devices, the functionality will usually be achieved by making adjustments to the software.
When a text message, composed with one of these devices, is sent by way of a network, in particular a GSM network, an UMTS network and/or the internet, to another electronic device with a screen suitable for displaying text, in particular a PDA, mobile phone, laptop, computer and/or a combination of some of these devices, the message can be read on the screen of the recipient of the message in the original way.
The device is equipped with a menu option which makes it possible to opt for a different text display mode on the screen (figure 10 and 11). When text files from another data source, in particular a computer, are loaded, this text will immediately be displayed in accordance with the way selected in the menu intended for this. It is preferred that information that does not contain any text, such as illustrations, photographs and/or diagrams, retains its original orientation. Figure 10 shows a PDA (27) with a section on the screen displaying the diary (28) and a section displaying the menu (26). Figure 11 shows the PDA (27) displaying the same page of the diary as a reflection in a point (28') carried out line by line, the part of the screen that shows the menu (27) is not reflected. Naturally, the text can also be displayed as a reflection in a point in its entirety or as a mirror image.

Furthermore, the invention provides for a data carrier for software applications, in particular floppy disk, cd-rom, data-DVD, hard disk, tape and/or memory module, containing software with which the above-mentioned method can be implemented in a programmable device.

The invention can also be applied to data carriers for video pictures, such as a VCD or a DVD, in particular a video-DVD. The functionality according to the invention can be realized by adding one or more options to the existing modules for subtitling television pictures. This addition includes the subtitling displayed according to the above descripted method. Furthermore it is conceivable that on a computer the existing subtitling with software is adapted according to the invention and this then is added on the data carrier as an extra option, or replaces the existing subtitling. Furthermore, the method can be implemented in a DVD player. A DVD player in this respect is also meant to include a computer, game console or any other device that can show video pictures from a data carrier (DVDs). The various kinds of subtitling are projected on the screen by a DVD player if necessary. The DVD player can then adapt this subtitling according to the invention and project the text picture reflected (in a line or in a point) on the video picture. In this case a normal DVD can be played while for people who have poor reading skills, the readability is improved. Preferably, these options are selected using the remote control of the DVD player. By a man skilled in the art, this functionality can easily be built into for instance a DVD player.

The invention can obviously be applied to publications, in particular newspapers, books and magazines, whether in an electronic form or not. Publications displayed according to the invention can improve the readability in particular for people with poor reading skills and/or dyslexia. In particular in this application, the elements that do not contain any text retain their original orientation. Although in principle for instance a book, newspaper or magazine can be read upside down, information which does not contain any text will then also be turned upside down causing the recognizability to be reduced or made impossible. Turning the book around in order to look at the illustrations correctly is time-consuming and will be detrimental to concentration. This disadvantage will be overcome when the invention is applied.

Although the invention is described using a number of examples which define preferred implementations of the invention, it will be clear that changes and modifications can be introduced without going beyond the scope of the invention as defined in the attached claims.

## Claims

1. Method for improving the readability of displayed texts, in particular for people with poor reading skills and/or dyslexia, **characterized by** displaying text, as in the letters of each word and the words of each sentence, in such a way that it can be read in a different direction from the normal direction.

2. Method according to claim 1 in which information which does not contain any text retains its original orientation.

3. Method according to one of the preceding claims in which text, as in the letters of each word and the words of each sentence, can be read from right to left.

4. Method according to one of the preceding claims **characterized in that** the text is displayed as a reflection in a point, said point being at the centre of the area in which the text is displayed, so that the text is turned upside down in its entirety.

5. Method according to one of claims 1-3 **characterized in that** the text is displayed line by line as a reflection in a point, said point being at the centre of the frame containing the line of text, so that the text will be turned upside down line by line.

6. Method according to one of claims 1-3 **characterized in that** text is displayed per line as a mirror image of each separate line, said text per line being reflected in a straight line running at the centre of the frame containing the line of text and at right angles to the direction of the lines of text or that the text contained in each entire display area is displayed as a mirror image, said entire display area being reflected in a straight line running along the centre of the display area and at right angles to the direction of the text, so that the text is displayed as a mirror image either line by line or in its entirety.

7. Method according to one of claims 1-3 **characterized in that** the text is displayed per line as a rotated image at an angle between 135 and 225 degrees, preferably 180 degrees, rotating approximately around the point situated at the centre of the frame containing the line of text or that the text per each display area is displayed as a rotated image at an angle between 135 and 225 degrees, preferably about 180 degrees, rotating approximately around the point at the centre of the display area, so that in a certain sense the text will be turned upside down either line by line or in its entirety.

8. Television set in which the method according to one of claims 1-7 is implemented.

9. Television set according to claim 8 **characterized by** the picture being displayed entirely or partially as a reflection in a line or as a reflection in a point.

10. Television set according to claim 8 provided with means to recognize text in the television picture and to display these text elements on the screen according to claim 1.

11. Television set according to claim 8 **characterized by** it being equipped with means enabling various text signals to be received separately whereby the text signal selected by the user can be displayed on the screen simultaneously with picture elements which do not contain any text.

12. Computer in which the method according to one of claims 1-7 is implemented.

13. Computer according to claim 12 **characterized in that** the functionality for the implementation of the method according to one of claims 1-7 is built into the operating system of the computer.

14. Computer according to claim 12 **characterized in that** the method being implemented by means of a plug-in into an existing software program or by the adaptation of an existing software program, in particular an internet browser, a word processor, a spreadsheet, a database program, a reader program for electronic publications and/or electronic mail.

15. Computer according to claim 12 **characterized by** the method being implemented by means of a hardware device.

16. Data carrier for a software application in which the method according to one of claims 1-7 is implemented.

17. Communication device, in particular a mobile phone, a PDA or a combination of both devices, in which the method according to one of claims 1-7 is implemented.

18. Data carrier for video pictures, in particular a DVD, or a playback device for a data carrier for video pictures, in particular a DVD player, in which the method according to one of claims 1-7 is implemented.

19. Data carrier for video pictures according to claim18 **characterized by** the method being implemented by adding extra options to the existing modules for subtitling in order to display text on a screen according to the method defined in one of claims 1-7.

20. Playback equipment for a data carrier for video pictures according to claim 18, in which the chosen subtitling can be processed according to the method defined in one of claims 1-7 and added to the picture signal.

21. Publications, in particular books, magazines and/or a newspaper whether in electronic form or not, in which the method according to one of claims 1-7 has been implemented.
